(19) Europäisches Patentamt
European Patent Office
Office européen des brevets

(11) **EP 3 943 251 A1**

(12) **EUROPÄISCHE PATENTANMELDUNG**

(43) Veröffentlichungstag:
26.01.2022 Patentblatt 2022/04

(21) Anmeldenummer: 20187105.0

(22) Anmeldetag: 22.07.2020

(51) Internationale Patentklassifikation (IPC):
**B25D 17/24** (2006.01) **B25D 11/00** (2006.01)
**B25F 5/00** (2006.01)

(52) Gemeinsame Patentklassifikation (CPC):
**B25D 17/24; B25D 11/00; B25F 5/006;**
B25D 2222/57; B25D 2250/121

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Bader, Thomas**
**86899 Landsberg am Lech (DE)**

• **Doberenz, Matthias**
**86836 Obermeitingen (DE)**
• **Tussing, Torsten**
**86836 Obermeitingen (DE)**
• **Schöpke, Sören**
**86859 Igling (DE)**
• **Brandner, Michael**
**86899 Landsberg am Lech / Erpfting (DE)**

(74) Vertreter: **Hilti Aktiengesellschaft**
**Corporate Intellectual Property**
**Feldkircherstrasse 100**
**Postfach 333**
**9494 Schaan (LI)**

(54) **STOSSDÄMPFUNGSEINRICHTUNG FÜR EINEN AKKUMULATOR**

(57) Werkzeugmaschine, insbesondere ein Meißelhammer, mit einem Gehäuse und einer Akkuschnittstelleneinrichtung für ein wiederlösbares Verbinden wenigstens eines Akkumulator mit der Werkzeugmaschine.
Eine Stoßdämpfungseinrichtung ist zwischen dem Gehäuse und der Akkuschnittstelleneinrichtung enthalten, wobei die Stoßdämpfungseinrichtung wenigstens ein Dämpfungselement enthält, welches in einer Längserstreckung senkrecht zu einer Arbeitsachse der Werkzeugmaschine angeordnet ist.

Fig. 4

EP 3 943 251 A1

**Beschreibung**

Die vorliegende Erfindung betrifft eine Werkzeugmaschine, insbesondere ein Meißelhammer, mit einem Gehäuse und einer Akkuschnittstelleneinrichtung für ein wiederlösbares Verbinden wenigstens eines Akkumulators mit der Werkzeugmaschine.

Akkubetriebene Bohr- und/oder Meißelhammer der eingangs genannten Art sind grundsätzlich aus dem Stand der Technik bekannt.

Wenn Akkumulatoren zur Versorgung der Werkzeugmaschine mit elektrischer Energie verwendet werden, ist es vorteilhaft, dass besondere Maßnahmen zum Schutz der Akkumulatoren gegen Stöße, Schläge und andere mechanische Einwirkungen getroffen werden. Akkumulatoren können durchaus empfindlich sein bzw. störanfällig auf derartige mechanische Einwirkungen, wie z.B. Schläge, Stöße, etc., reagieren.

Aus dem Stand der Technik bekannte Schutzvorrichtungen für Akkumulatoren an Werkzeugmaschinen sind für gewöhnlich unzureichend und/oder zu komplex.

Aufgabe der vorliegenden Erfindung ist es daher, eine Werkzeugmaschine, insbesondere ein Meißelhammer, bereitzustellen, mit dem das vorstehend genannte Problem gelöst und bei der der Schutz von mit der Werkzeugmaschine verbundenen Akkumulatoren verbessert werden kann.

Die Aufgabe wird jeweils gelöst durch den Gegenstand des unabhängigen Anspruchs 1. Weitere vorteilhafte Ausgestaltungsformen der Erfindung finden sich in den entsprechenden Unteransprüchen.

Die Aufgabe wird insbesondere gelöst durch eine Werkzeugmaschine, insbesondere ein Meißelhammer, mit einem Gehäuse und einer Akkuschnittstelleneinrichtung für ein wiederlösbares Verbinden wenigstens eines Akkumulators mit der Werkzeugmaschine.

Erfindungsgemäß ist eine Dämpfungseinrichtung zum Absorbieren und Dämpfen von auf den wenigstens einen Akkumulator einwirkenden Stößen zwischen dem Gehäuse und der Akkuschnittstelleneinrichtung enthalten. Hierdurch können mechanische Einwirkungen auf den Akkumulator, wie z.B. Schläge, Stöße, etc., reduziert und der Akkumulator geschützt werden. Die Dämpfungseinrichtung kann dabei auch als Stoßdämpfungseinrichtung bezeichnet werden.

Darüber hinaus kann die Dämpfungseinrichtung auch genutzt werden, um auf den Akkumulator einwirkende Vibrationen zu reduzieren.

Entsprechend einer weiteren vorteilhaften Ausführungsform der vorliegenden Erfindung kann es möglich sein, dass die Dämpfungseinrichtung wenigstens ein Dämpfungselement enthält, welches in einer Längserstreckung senkrecht zu einer Arbeitsachse der Werkzeugmaschine angeordnet ist.

Gemäß einer vorteilhaften Ausführungsform der vorliegenden Erfindung kann es möglich sein, dass das Dämpfungselement zylindrisch ausgestaltet ist und im Wesentlichen eine ovale Querschnittsfläche enthält.

Entsprechend einer weiteren vorteilhaften Ausführungsform der vorliegenden Erfindung kann es möglich sein, dass das wenigstens ein Dämpfungselement an einer Außenmantelfläche wenigstens eine axial verlaufende Nut enthält. Hierdurch kann die Elastizität und folglich die Wirkung der Dämpfung des Dämpfungselements erhöht werden.

Gemäß einer vorteilhaften Ausführungsform der vorliegenden Erfindung kann es möglich sein, dass das wenigstens ein Dämpfungselement wenigstens teilweise einem elastischen Werkstoff enthält. Bei dem elastischen Werkstoff kann es sich um ein Elastomer oder Gummi handeln.

Entsprechend einer weiteren vorteilhaften Ausführungsform der vorliegenden Erfindung kann es möglich sein, dass das wenigstens ein Dämpfungselement in Form eines Federelements, insbesondere eines Spiralfederelements, ausgestaltet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:

Figur 1  eine Seitenansicht auf eine als Meißelhammer ausgestaltete Werkzeugmaschine;

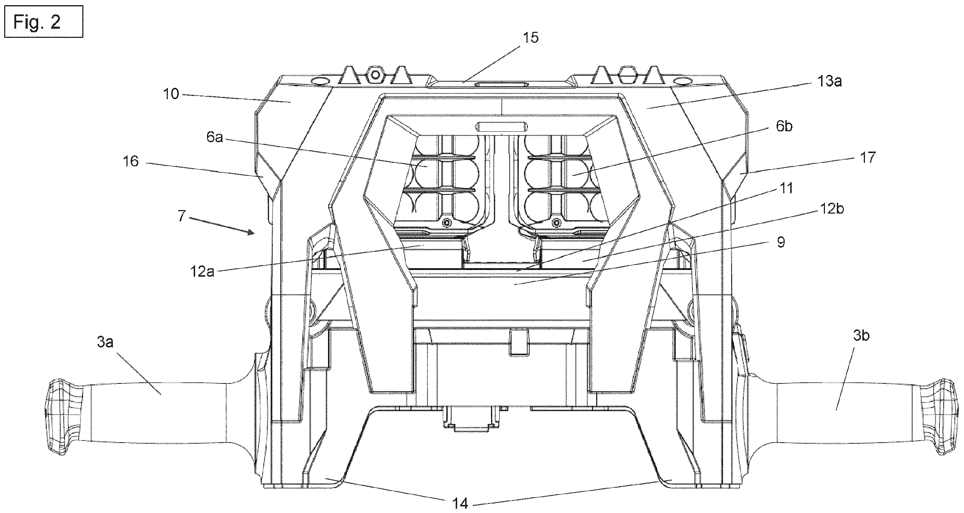

Figur 2  eine Seitenansicht auf oberes Ende eines Gehäuses der Werkzeugmaschine mit einem Schutzbügel;

Figur 3  eine seitliche Ansicht auf das obere Ende des Gehäuses der Werkzeugmaschine mit dem Schutzbügel;

Figur 4  eine perspektivische Ansicht auf das obere Ende des Gehäuses der Werkzeugmaschine mit einer Stoßdämpfungseinrichtung und ohne den Schutzbügel;

Figur 5  eine Schnittansicht durch die Stoßdämpfungseinrichtung;

Figur 6  eine weitere Schnittansicht durch die Stoßdämpfungseinrichtung sowie einen ersten und zweiten Akkumulator; und

Figur 7  eine perspektivische Ansicht auf ein Dämpfungselement.

**Ausführungsbeispiele:**

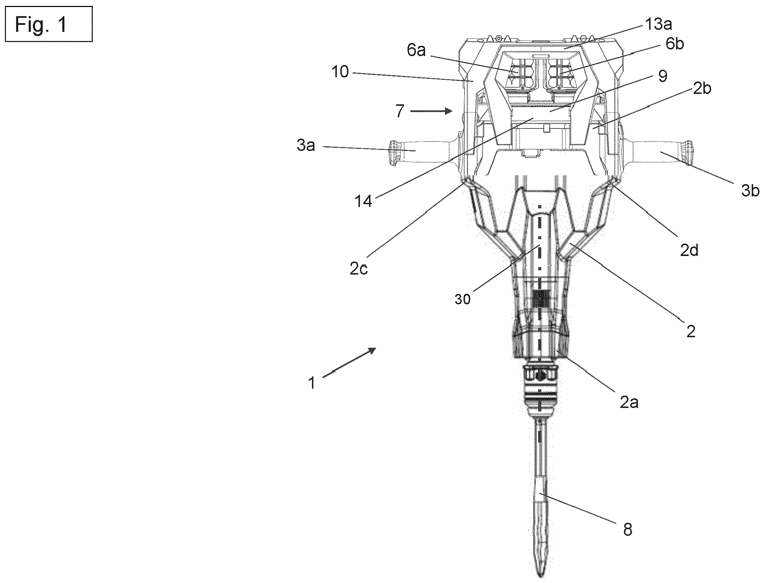

In Figur 1 ist eine Werkzeugmaschine 1 in Ausgestaltung eines Meißelhammers gezeigt. Es ist jedoch auch möglich, dass die Werkzeugmaschine 1 in Form einer Säge, eines Schleifgeräts, eines Schraubers, einer Bohrmaschine, eines Bohrhammers oder dergleichen ausgestaltet ist.

Die als Meißelhammer ausgestaltete Werkzeugmaschine 1 enthält dabei im Wesentlichen ein Gehäuse 2, einen ersten Handgriff 3a, einen zweiten Handgriff 3b, eine Akkuaufnahmevorrichtung 4 sowie eine Werkzeugaufnahme 5.

Im Inneren des Gehäuses 2 ist im Wesentlichen ein Elektromotor und eine Schlagvorrichtung enthalten. Die Schlagvorrichtung kann auch als Schlagwerk oder Schlagwerksvorrichtung bezeichnet werden. Der Elektromotor und die Schlagvorrichtung sind dabei so miteinander verbunden, dass pulsartige Schläge erzeugt und auf die Werkzeugaufnahme 5 übertragen werden. Weder der Elektromotor noch die Schlagvorrichtung sind in den Figuren dargestellt.

Zur Versorgung der Werkzeugmaschine 1 und insbesondere des Elektromotors mit elektrischer Energie ist ein erster und zweiter Akkumulator 6a, 6b über die Akkuaufnahmevorrichtung 7 mit der Werkzeugmaschine 1 verbunden. Gemäß einer alternativen Ausführungsform ist es auch möglich, dass lediglich ein Akkumulator oder mehr als zwei Akkumulatoren verwendet werden können.

Das Gehäuse 2 enthält wiederum ein erstes Ende 2a, ein zweites Ende 2b, eine linke Seitenwand 2c und eine rechte Seitenwand 2d. Der erste Handgriff 3a ist an der linken Seitenwand 2c und der zweite Handgriff 3b ist an der rechten Seitenwand 2d positioniert. Die Werkzeugaufnahme 5 ist an dem ersten Ende 2a des Gehäuses 2 positioniert und dient dazu, ein Werkzeug 8 aufzunehmen und zu halten.

Bei dem Ausführungsbeispiel, welches in den Figuren dargestellt ist, ist das Werkzeug 8 in Form eines Meißels ausgestaltet. Die Akkuaufnahmevorrichtung 5 ist an dem zweiten Ende 2b des Gehäuses 2 positioniert und dient zum Aufnehmen sowie Halten des ersten und zweiten Akkumulators 6a, 6b.

Die Akkuaufnahmevorrichtung 4 enthält wiederum eine Akkuschnittstelleneinrichtung 9 sowie eine Akku-Fallschutzeinrichtung 10.

Die Akkuschnittstelleneinrichtung 9 enthält dabei im Wesentlichen eine ebene Grundplatte 11, eine erste Anschlusseinrichtung 12a zum Aufnehmen des ersten Akkumulators 6a sowie eine zweite Anschlusseinrichtung 12b zum Aufnehmen des zweiten Akkumulators 6b. Die erste und zweite Anschlusseinrichtung 12a, 12b ist in Pfeilrichtung Y auf der Grundplatte 11 positioniert. Mit Hilfe der ersten und zweiten Anschlusseinrichtung 12a, 12b ist der erste und zweite Akkumulator 6a, 6b wieder lösbar mit der Werkzeugmaschine 1 sowohl mechanisch als auch elektrisch verbindbar. Durch die wiederlösbare Verbindung des ersten und zweiten Akkumulators 6a, 6b kann elektrische Energie von den beiden Akkumulatoren 6a, 6b zu den Verbrauchern (z.B.

der Elektromotor) der Werkzeugmaschine 1 gelangen. Es ist bei möglich, dass lediglich ein einziger Akkumulator zur Versorgung der Werkzeugmaschine 1 verwendet wird.

Die Akku-Fallschutzeinrichtung 10 dient im Wesentlichen dazu den ersten und zweiten Akkumulator im Falle eines Sturzes oder Umfallens der Werkzeugmaschine 1 vor einem Schlag bzw. Aufschlag zu schützen.

Wie in den Figuren dargestellt enthält die Akku-Fallschutzeinrichtung 10 im Wesentlichen einen ersten und zweiten Schutzbügel 13a, 13b. Die Schutzbügel 13a, 13b können auch als Stützrahmen oder Rahmen bezeichnet werden.

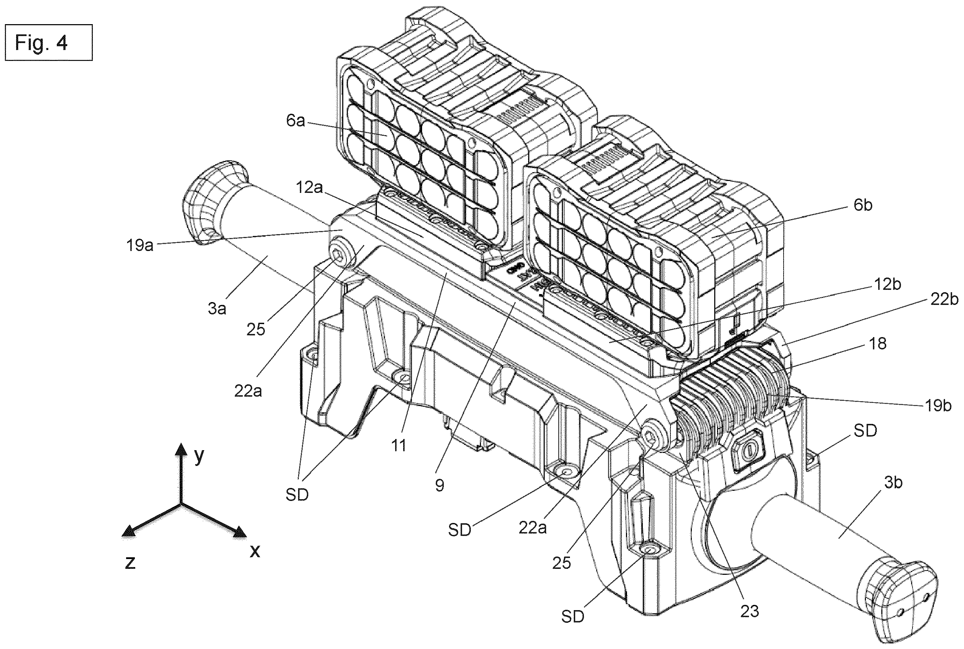

Sowohl der erste als auch zweite Schutzbügel 13a, 13b enthält jeweils ein erstes Ende 14, ein zweites Ende 15, ein linkes Ende 16 und ein rechtes Ende 17. Das erste Ende 14 des ersten und zweiten Schutzbügels 13a, 13b ist an dem zweiten Ende 2b des Gehäuses 2 der Werkzeugmaschine 1 positioniert. Der erste und zweite Schutzbügel 13a, 13b ist dabei durch Schrauben mit dem Gehäuse 2 der Werkzeugmaschine 1 wiederlösbar verbunden. In Figur 4 sind fünf der insgesamt acht Schraubenlöcher bzw. die Schraubendome SD für die Schrauben zum Befestigen der beiden Schutzbügel 13a, 13b an dem Gehäuse 2 der Werkzeugmaschine 1 dargestellt. Jeder Schutzbügel 13a, 13b ist dabei mit vier Schrauben an dem Gehäuse 2 der Werkzeugmaschine 1 fixiert. Die Schrauben sind in den Figuren nicht dargestellt. Gemäß einer alternativen Ausgestaltung kann es auch möglich sein, dass der ersten und/oder zweite Schutzbügel 13a, 13b fest, d.h. unlösbar, mit dem Gehäuse 2 der Werkzeugmaschine 1 verbunden ist.

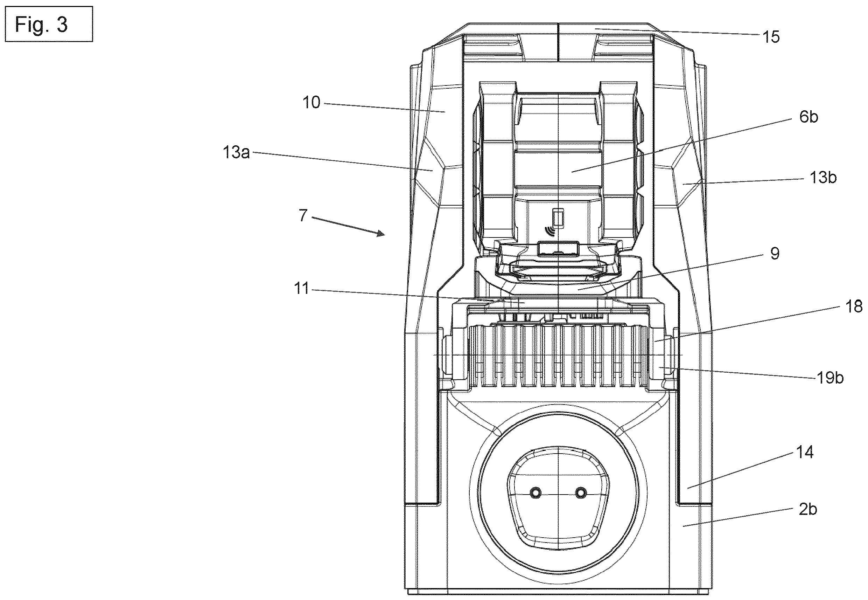

Die beiden Schutzbügel 13a, 13b sind so ausgestaltet, dass sie an ihrem zweiten Ende 15 in Kontakt stehen und miteinander verbunden sind. Wie in Figur 3 ersichtlich bilden die beiden Schutzbügel 13a, 13b an dem zweiten Ende 15 eine ebene Fläche. In einem montierten Zustand, d.h. wenn beide Schutzbügel 13a, 13b mit dem zweiten Ende 2a des Gehäuses 2 der Werkzeugmaschine 1 verbunden sind, bilden die beiden Schutzbügel 13a, 13b eine Art Käfig mit einem Innenraum IR. In den Innenraum IR zwischen den beiden Schutzbügeln 13a, 13b kann der erste und zweite Akkumulator 6a, 6b aufgenommen werden.

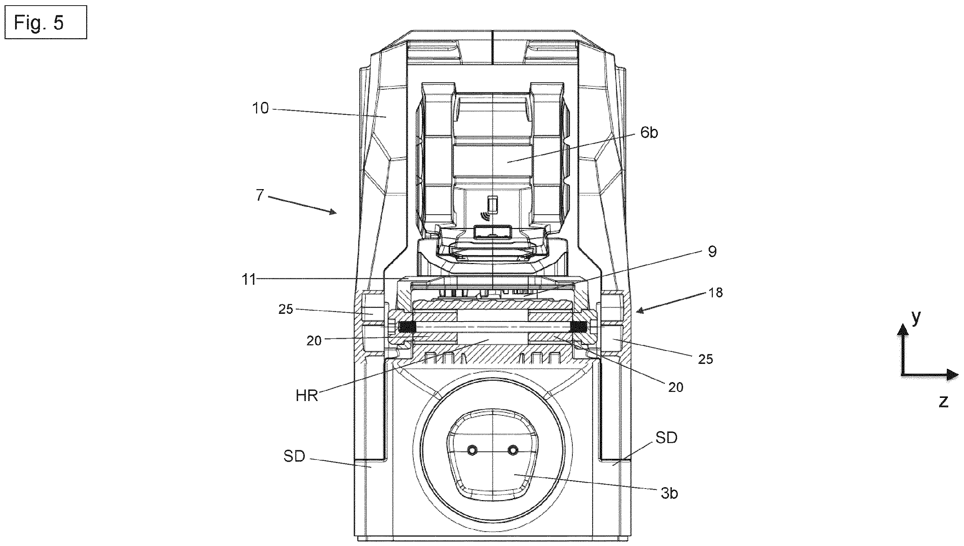

Wie insbesondere in den Figuren 4 und 5 gezeigt, ist die Akkuschnittstelleneinrichtung 9 an dem zweiten Ende 2b des Gehäuses 1 der Werkzeugmaschine 1 positioniert. Wie bereits vorstehen angedeutet, ist die Akkuschnittstelleneinrichtung 9 ausgestaltet, um den ersten und zweiten Akkumulator 6a, 6b mit dem Gehäuse 2 der Werkzeugmaschine 1 wiederlösbar zu verbinden. Der ersten Akkumulator 6a wird hierzu in Pfeilrichtung X auf die erste Anschlusseinrichtung 12a und der zweite Akkumulator 6b wird entgegen der Pfeilrichtung X auf die zweite Anschlusseinrichtung 12b geschoben.

Eine Dämpfungseinrichtung 18 ist zwischen dem Gehäuse 2 der Werkzeugmaschine 1 und der Akkuschnittstelleneinrichtung 9 positioniert. Die Dämpfungseinrichtung 18 dient im Wesentlichen zum Absorbieren von Stößen, Schlägen und anderen mechanischen Einflüssen auf die Akkuaufnahmevorrichtung 4. Wie in den Figuren dargestellt, enthält die Dämpfungseinrichtung 18 im Wesentlichen ein erstes und zweites Scharnierelement 19a, 19b sowie ein Dämpfungselement 20.

Jedes Scharnierelement 19a, 19b enthält ein Zapfen 21, ein erstes und zweites oberes Scharnierband 22a. 22b sowie ein unteres Scharnierband 23. Die beiden oberen Scharnierbänder 22a. 22b sind voneinander beabstandet mit der Grundplatte 11 der Akkuschnittstelleneinrichtung 9 und das untere Scharnierband 23 ist mit dem zweiten Ende 2b des Gehäuses 2 der Werkzeugmaschine 1 verbunden. Im vorliegenden Ausführungsbeispiel ist das untere Scharnierband 23 in Form einer durchgehenden Scharnierkammer mit einem Durchgangsbohrung ausgestaltet. Der Zapfen 21 ist waagerecht in Pfeilrichtung Z zwischen den oberen Scharnierbändern 22a, 22b und dem unteren Scharnierband 23 angeordnet.

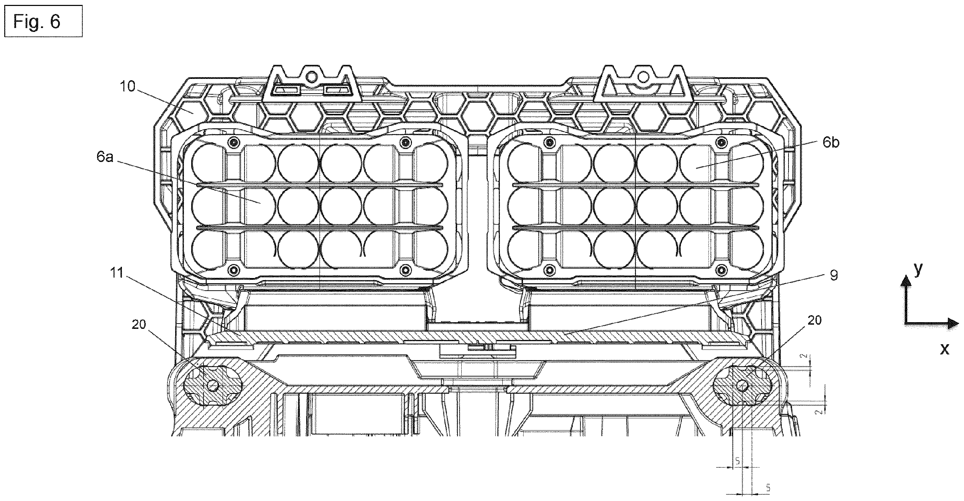

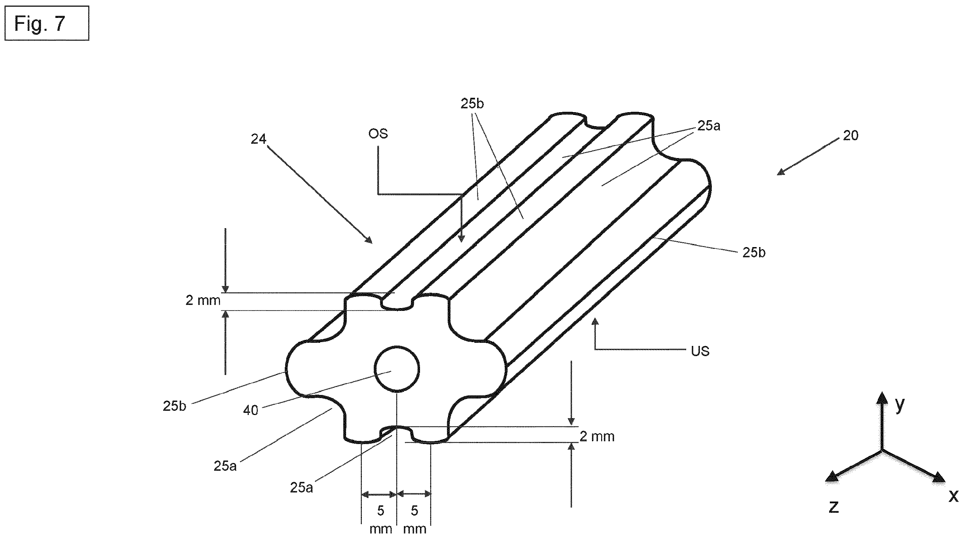

Das Dämpfungselement 20 ist zylindrisch ausgestaltet und weist im Wesentlichen eine ovale Querschnittsfläche mit einer zentralen Durchbohrung 40 auf, vgl. Figur 7. Darüber hinaus besteht das Dämpfungselement 20 aus einem elastischen Werkstoff, wie z.B. Gummi. Wie ebenfalls in Figur 7 gezeigt, enthält das Dämpfungselement 20 an einer Außenmantelfläche 24 eine Anzahl an axial verlaufende Nuten 25a und Federn 25b auf. Mit anderen Worten: eine Anzahl an Erhebungen 25b und Vertiefungen 25a. Die Nuten und Vertiefungen 25a können auch als längliche Aussparungen bezeichnet werden. Die Vielzahl an Nuten 25 entlang der Außenmantelfläche 24 des Dämpfungselements 20 hat den Effekt, dass das Dämpfungselement 20 erhöhte elastisch Eigenschaften aufweist. Wie den Figuren 6 und 7 zu entnehmen ist, weist die Nut an der Oberseite OS sowie an der Unterseite US des Dämpfungselements 20 eine Tiefe von 2 mm auf. Die beiden Federn 25b an der Oberseite OS und an der Unterseite US sind jeweils 10 mm voneinander entfernt. Die höchste Erhebung der Feder 25b ist dabei 5 mm von der tiefsten Stelle der Nut 25a entfernt.

Wie insbesondere Figur 5 zu entnehmen ist, ist ein erstes und zweites Dämpfungselement 20 um den Zapfen 21 positioniert. Der Zapfen 21 wird dabei in die Durchbohrung 40 eingeführt. Das erste und zweite Dämpfungselement 20 ist in der Ausgestaltung identisch. Die Länge eines jeden Dämpfungselements 20 entspricht dabei ungefähr ein Drittel der Länge des Zapfens 21. Das erste Dämpfungselement 20 ist dabei an dem ersten Ende 21a des Zapfens 21 und das zweite Dämpfungselement 20 ist an dem zweiten Ende 21b des Zapfens 21 positioniert. Zwischen dem ersten und zweiten Dämpfungselement 20 ist ein Frei- bzw. Hohlraum HR gelassen. Der Hohlraum HR dient dazu, dass das erste und zweite Dämpfungselement 20 bei einer Verformung ausdehnen können.

Gemäß einer alternativen Ausgestaltungsform der Dämpfungseinrichtung 18 ist es möglich, dass anstelle eines ersten und zweiten Dämpfungselements 20 lediglich ein einziges durchgehendes Dämpfungselement um den Zapfen 21 vorgesehen ist.

Um den Zapfen 21 zwischen den oberen und unteren Scharnierbändern 22a, 22b, 23 in Position zu halten und zu verhindern, dass der Zapfen 21 und damit die Dämpfungselemente 20 aus der Dämpfungseinrichtung 18 herausfallen, ist jeweils eine Schraubenmutter 26 an dem Ende 21a, 21b des Zapfens 21 vorgesehen.

Durch die Positionierung des elastischen Dämpfungselements 20 um den Zapfen 21 ist es möglich, dass die oberen Scharnierbänder 22a, 22b sich relativ zu dem unteren Scharnierband 23 bewegen kann. Folglich kann sich Akkuschnittstelleneinrichtung 9 relativ zu dem Gehäuse 2 der Werkzeugmaschine 1 bewegen. Mit anderen Worten: die Akkuschnittstelleneinrichtung 9 ist durch die Dämpfungseinrichtung 18 von dem Gehäuse 2 der Werkzeugmaschine 1 entkoppelt.

Gemäß einer alternativen Ausgestaltungsform der Dämpfungseinrichtung 18 ist das Dämpfungselement 20 in Form eines Federelements, insbesondere eines Spiralfederelements, ausgestaltet.

Der Wert der Federkonstante für das Dämpfungselement 20 ist so zu wählen, dass die Auslenkung des Dämpfungselements 20 (d.h. der Feder) minimal ist. Durch eine minimale Auslenkung des Dämpfungselements 20 kann verhindert werden, dass ein Schlag auf das Gehäuse 2 der Werkzeugmaschine 1 (wie beispielsweise bei einem Umfallen der Werkzeugmaschine) zu einem Erschüttern und Aufschlagen der Akkumulatoren 6a, 6b auf den Untergrund führt.

Beispielsrechnung für eine minimale Auslenkung des Dämpfungselements:

$$E_{pot} \text{ Feder} = \tfrac{1}{2} \times D \times s^2$$

$E_{pot}$ Feder = potentielle Energie der Feder bzw. des Dämpfungselements
s = Auslenkung der Feder bzw. des Dämpfungselements
D = Federkonstante

$$E_{pot} \text{ WZM} = m \times g \times h$$

$E_{pot}$ WZM = potentielle Energie der Werkzeugmaschine
m = Masse eines oder mehrerer Akkus
g = Gravitation = 9,81 m/s$^2$
h = Höhe vom Boden zur Akku-Position an der Werkzeugmaschine

$$\tfrac{1}{2} \times D \times s^2 = m \times g \times h$$

$$s = \sqrt{(2 \, x \, m \, x \, g \, x \, h / D)}$$

Beispiel:

D = 275 bis 300 kN/m
s = 5 mm

**Bezugszeichen:**

| | |
|---|---|
| 1 | Werkzeugmaschine |
| 2 | Gehäuse |
| 3a | erster Handgriff |
| 3b | zweiter Handgriff |
| 4 | Akkuaufnahmevorrichtung |
| 5 | Werkzeugaufnahme |
| 6a | erster Akkumulator |
| 6b | zweiter Akkumulator |
| 7 | Akkuaufnahmevorrichtung |
| 8 | Werkzeug |
| 9 | Akkuschnittstelleneinrichtung |
| 10 | Akku-Fallschutzeinrichtung |
| 11 | Grundplatte |
| 12a | erste Anschlusseinrichtung |
| 12b | zweite Anschlusseinrichtung |
| 13a | erster Schutzbügel |
| 13b | zweiter Schutzbügel |
| 14 | erstes Ende des Schutzbügels |
| 15 | zweites Ende des Schutzbügels |
| 16 | linkes Ende des Schutzbügels |
| 17 | rechtes Ende des Schutzbügels |
| 18 | Dämpfungseinrichtung |
| 19a | erstes Scharnierelement |
| 19b | zweites Scharnierelement |
| 20 | Dämpfungselement |
| 21 | Zapfen |
| 22a | erstes oberes Scharnierband |
| 22b | zweites oberes Scharnierband |
| 23 | unteres Scharnierband |
| 24 | Außenmantelfläche |
| 25a | axial verlaufende Nut |
| 25b | Feder |
| 26 | Schraubenmutter |
| 40 | Durchbohrung |
| | |
| HR | Hohlraum |
| SD | Schraubenlöcher |
| OS | Oberseite des Dämpfungselements |
| US | Unterseite des Dämpfungselements |

**Patentansprüche**

1. Werkzeugmaschine (1), insbesondere ein Meißelhammer, mit einem Gehäuse (2) und einer Akkuschnittstelleneinrichtung (9) für ein wiederlösbares Verbinden wenigstens eines Akkumulators (6a, 6b) mit der Werkzeugmaschine (1) **dadurch gekennzeichnet, dass** eine Dämpfungseinrichtung (18) zum Absorbieren und Dämpfen von auf den wenigstens einen Akkumulator (6a, 6b) einwirkenden Stößen zwischen dem Gehäuse (2) und der Akkuschnittstelleneinrichtung (9) enthalten ist.

2. Werkzeugmaschine (1) nach Anspruch 1, **dadurch gekennzeichnet, dass** die Dämpfungseinrichtung (18) wenigstens ein Dämpfungselement (20) enthält, welches in einer Längserstreckung (Z) senkrecht zu einer Arbeitsachse (30) der Werkzeugmaschine (1) angeordnet ist.

3. Werkzeugmaschine (1) nach Anspruch 1 oder 2, **dadurch gekennzeichnet, dass** das wenigstens ein Dämpfungselement (20) zylindrisch ausgestaltet ist und im Wesentlichen eine ovale Querschnittsfläche enthält.

4. Werkzeugmaschine (1) nach wenigstens einem der Ansprüche 1 bis 3, **dadurch gekennzeichnet, dass** das wenigstens ein Dämpfungselement (20) an einer Außenmantelfläche wenigstens eine axial verlaufende Nut (25a) enthält.

5. Werkzeugmaschine (1) nach wenigstens einem der Ansprüche 1 bis 4, **dadurch gekennzeichnet, dass** das wenigstens ein Dämpfungselement (20) wenigstens teilweise einem elastischen Werkstoff enthält.

6. Werkzeugmaschine (1) nach wenigstens einem der Ansprüche 1 bis 4, **dadurch gekennzeichnet, dass** das wenigstens ein Dämpfungselement (20) in Form eines Federelements, insbesondere eines Spiralfederelements, ausgestaltet ist.

Fig. 1

EP 3 943 251 A1

Fig. 2

Fig. 3

Fig. 4

Fig. 5

EP 3 943 251 A1

Fig. 6

11

Fig. 7

**Europäisches Patentamt**
**European Patent Office**
**Office européen des brevets**

# EUROPÄISCHER RECHERCHENBERICHT

**Nummer der Anmeldung**

EP 20 18 7105

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 215660 A1 (BOSCH GMBH ROBERT [DE]) 22. Februar 2018 (2018-02-22) | 1-3,5 | INV. B25D17/24 B25D11/00 B25F5/00 |
| Y | * Absätze [0005], [0043]; Abbildungen 1-5 * | 4 | |
| | ----- | | |
| X | US 2020/215679 A1 (TAMURA KENGO [JP] ET AL) 9. Juli 2020 (2020-07-09) * Absatz [0162]; Abbildungen 8-19 * | 1,3 | |
| | ----- | | |
| X | DE 11 2014 006502 T5 (MAKITA CORP [JP]) 29. Dezember 2016 (2016-12-29) * Absätze [0051], [0052]; Abbildungen 1,2 * | 1,6 | |
| | ----- | | |
| X | GB 2 486 986 A (BOSCH GMBH ROBERT [DE]) 4. Juli 2012 (2012-07-04) * Seite 5, Zeile 16 - Seite 6, Zeile 23; Abbildungen 1,4 * | 1 | |
| | ----- | | |
| Y | EP 1 882 559 A1 (HILTI AG [LI]) 30. Januar 2008 (2008-01-30) * Absatz [0039] * | 4 | |
| | ----- | | |

**RECHERCHIERTE SACHGEBIETE (IPC)**

B25D
B25H
B25F
H02J

Der vorliegende Recherchenbericht wurde für alle Patentansprüche erstellt

| Recherchenort | Abschlußdatum der Recherche | Prüfer |
|---|---|---|
| Den Haag | 8. Dezember 2020 | Coja, Michael |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 20 18 7105

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2020

| Im Recherchenbericht angeführtes Patentdokument | Datum der Veröffentlichung | Mitglied(er) der Patentfamilie | Datum der Veröffentlichung |
|---|---|---|---|
| DE 102016215660 A1 | 22-02-2018 | CN 109863001 A<br>DE 102016215660 A1<br>EP 3500405 A1<br>WO 2018036720 A1 | 07-06-2019<br>22-02-2018<br>26-06-2019<br>01-03-2018 |
| US 2020215679 A1 | 09-07-2020 | CN 111065491 A<br>DE 112018005485 T5<br>JP WO2019065088 A1<br>US 2020215679 A1<br>WO 2019065088 A1 | 24-04-2020<br>15-10-2020<br>09-07-2020<br>09-07-2020<br>04-04-2019 |
| DE 112014006502 T5 | 29-12-2016 | DE 112014006502 T5<br>JP 6501414 B2<br>JP WO2015145583 A1<br>US 2017106518 A1<br>WO 2015145583 A1 | 29-12-2016<br>17-04-2019<br>13-04-2017<br>20-04-2017<br>01-10-2015 |
| GB 2486986 A | 04-07-2012 | CN 102528775 A<br>DE 102011002404 A1<br>GB 2486986 A<br>US 2012171539 A1 | 04-07-2012<br>05-07-2012<br>04-07-2012<br>05-07-2012 |
| EP 1882559 A1 | 30-01-2008 | DE 102006000375 A1<br>EP 1882559 A1<br>JP 5124195 B2<br>JP 2008030192 A<br>US 2008047724 A1 | 31-01-2008<br>30-01-2008<br>23-01-2013<br>14-02-2008<br>28-02-2008 |

EPO FORM P0461

Für nähere Einzelheiten zu diesem Anhang : siehe Amtsblatt des Europäischen Patentamts, Nr.12/82